# EUROPÄISCHE PATENTSCHRIFT

(11) **EP 2 061 131 B1**
(45) Veröffentlichungstag und Bekanntmachung des Hinweises auf die Patenterteilung: **29.12.2010**
(21) Anmeldenummer: 08168840.0
(22) Anmeldetag: 11.11.2008
(51) Int. Cl.: H02J 13/00, H02J 3/14, H05B 1/02

(54) **Verfahren und Vorrichtung zur Steuerung der Verteilung von elektrischer Energie für eine Mehrzahl von elektrischen Heizeinrichtungen einer Küche**
Method and device for controlling the distribution of electrical energy for a number of electrical heating devices in a kitchen
Procédé et dispositif destinés à la commande de la distribution d'énergie électrique pour une multitude de dispositifs de chauffage électriques d'une cuisine

(30) Priorität: 15.11.2007 CH 17672007
(43) Veröffentlichungstag der Anmeldung: 20.05.2009
(73) Patentinhaber: Elro (Holding ) AG, 5620 Bremgarten (CH)
(72) Erfinder: Gatter, Raimond, 8730 Uznach (CH)
(74) Vertreter: Liebetanz, Michael

(56) Entgegenhaltungen:
- EP-A- 0 456 872
- EP-A- 1 263 108
- WO-A-95/29572
- US-A1- 2002 024 332
- US-A1- 2007 040 657

## Beschreibung

### Technisches Gebiet der Erfindung

Die vorliegende Erfindung betrifft ein Verfahren und eine Vorrichtung zur Steuerung der Verteilung von elektrischer Energie für eine Mehrzahl von elektrischen Heizeinrichtungen einer Küche gemäss den Merkmalen des Oberbegriffs des Anspruchs 1 bzw. 8, wobei die elektrische Energie derart verteilt wird, dass die Gesamtleistungsaufnahme nicht grösser als ein definierter Maximalwert bzw. ein Prozentsatz des Anschlusswertes ist.

### Stand der Technik

Aus dem Stand der Technik sind Vorrichtungen und Verfahren der Eingangs genannten Art bekannt.

Beispielsweise wird in der EP 1 067 650 eine solche Vorrichtung und ein Betriebsverfahren dazu angegeben. Eine Vielzahl von elektrischen Heizeinrichtungen wird über verschiedene Phasen mit Spannung versorgt. Eine Umschaltereinrichtung ist vorhanden, mit der die Spannungsversorgung der Heizeinrichtungen unterbrechbar ist, wenn die Gesamtleistungsaufnahme der elektrischen Heizeinrichtungen grösser als ein Maximalwert ist. Dabei ist die Steuereinrichtung so ausgestaltet, dass nach Ablauf einer vorbestimmten Zeitperiode der Maximalwert durch einen Steuerimplus um einen vorbestimmten Betrag vergrösserbar oder verkleinerbar ist.

Mit der in EP 1 067 650 offenbarten Einrichtung konnten sehr gute Resultate erzielt werden. Allerdings lässt sich die Vorrichtung von EP 1 067 650 nicht modular einsetzen. Wenn beispielsweise eine Heizeinrichtung hinzugefügt oder entfernt wird, ist dies immer mit einem Aufwand verbunden, da dies meistens eine neue Verkabelung mit sich bringt.

Zudem sei hier angemerkt, dass die Vorrichtung aus der EP 1 067 650 für Grossküchen mit vielen Heizeinrichtungen in ihrer Funktion sehr vorteilhaft ist. Für kleinere Küchen (bis etwa 12 bis 20 Heizeinrichtungen) besteht das Bedürfnis nach einer einfacheren Vorrichtung.

Weiterhin offenbart EP0456872 ein Verfahren sowie eine Vorrichtung nach dem Oberbegriff von Anspruch 1

### Darstellung der Erfindung

Ausgehend von diesem Stand der Technik liegt der Erfindung die Aufgabe zugrunde, eine eingangs genannte Vorrichtung und ein Verfahren anzugeben, welche einfacher ausgestaltet sind. Insbesondere ist eine kompakte Vorrichtung, welche flexibel ausgebaut werden kann, wünschbar.

Diese Aufgabe löst ein Verfahren mit den Merkmalen des Patentanspruchs 1. Demgemäss dient ein erfindungsgemässes Verfahren der Steuerung des Verbrauches von elektrischer Energie für eine Mehrzahl von elektrischen Heizeinrichtungen einer Küche mit jeweils einer Apparatesteuerung. Die Apparatesteuerung umfasst eine Steuerungseinrichtung, eine Speichereinrichtung, eine Kommunikationseinrichtung und Eingabeelemente zur Vorgabe des gewünschten Leistungsniveaus, wobei die Kommunikationseinrichtungen der Heizeinrichtungen miteinander kommunizieren können. Eine der eingeschalteten Heizeinrichtungen mit der entsprechenden Apparatesteuerung wird als Master bestimmt. Die anderen eingeschalteten Heizeinrichtungen mit den entsprechenden Apparatesteuerungen werden als Slaves definiert. Dem Master werden die gewünschten oder möglichen Leistungsniveaus aller angeschalteten Heizeinrichtungen über die Kommunikationseinrichtungen mitgeteilt. Der Master bestimmt die Leistungsaufnahme aller angeschalteten Heizeinrichtungen, so dass ein vorbestimmter Schwellwert nicht überschritten wird.

Vorzugsweise kommunizieren die Kommunikationseinrichtungen über ein Bussystem oder ein Netzwerk, wie ein drahtgebundenes Netzwerk oder ein drahtloses Funknetzwerk, kommunizieren. Dadurch kann eine neue oder eine bestehende Einrichtung in effizienter Art und Weise aufgebaut bzw. ausgebaut werden.

Vorzugsweise erstellt der Master eine Tabelle, wobei die Tabelle mindestens die Identifikation des Slaves und des Masters, die von der Heizeinrichtung des entsprechenden Slaves gewünschte Leistungsaufnahme und die vom Master bestimmte Leistungsaufnahme für jede Heizeinrichtung beinhaltet. Dadurch wird sichergestellt, dass die Gesamtleistungsaufnahme einen Schwellwert nicht überschreitet.

Weitere vorteilhafte Ausfiihrungsformen des Verfahrens sind in den Unteransprüchen gekennzeichnet.

Es wird eine Vorrichtung zur Steuerung des Verbrauches von elektrischer Energie für eine Mehrzahl von elektrischen Heizeinrichtungen einer Küche angegeben, wobei jede Heizeinrichtung eine Apparatesteuerung umfasst. Die Apparatesteuerung umfasst mindestens eine Steuereinrichtung, Eingabeelemente zur Vorgabe eines gewünschten Heizzustandes, eine Speichereinrichtung zur Speicherung von Daten und eine Kommunikationseinrichtung. Jeder Apparatesteuerung ist wahlweise einen Zustand als Master oder als Slave zuweisbar. Durch den Master sind die Leistungsaufnahmen aller Heizeinrichtungen bestimmbar.

Weitere vorteilhafte Ausführungsformen der Vorrichtung sind in den Unteransprüchen gekennzeichnet.

### Kurze Beschreibung der Zeichnung

Bevorzugte Ausführungsformen werden im folgenden anhand der Zeichnungen beispielhaft näher beschrieben. Es zeigen:
- Fig. 1: eine schematische Ansicht einer Gruppe zu steuernder Heizeinrichtungen;
- Fig. 2: eine schematische Ansicht eine einzelnen Heizeinrichtung mit einer Vor- richtung gemäss der Erfindung;
- Fig. 3.: eine schematische Ansicht einer Gruppe zu steuernder Heizeinrichtungen, wobei eine Heizeinrichtung 1 ausgeschaltet ist; und
- Fig. 4: ein Flussdiagramm eines Verfahrens gemäss einem Ausführungsbeispiel der Erfindung zur Steuerung von einer Mehrzahl von Heizeinrichtungen.

### Beschreibung von bevorzugten Ausführungsbeispielen

Mit Bezug zu den Zeichnungen werden mögliche Ausführungsbeispiele beschrieben. Die Zeichnungen und die Beschreibung zeigen bevorzugte Ausführungsbeispiele und sollten nicht ausgelegt werden, um die Erfindung einzuschränken, welche durch die Ansprüche definiert ist.

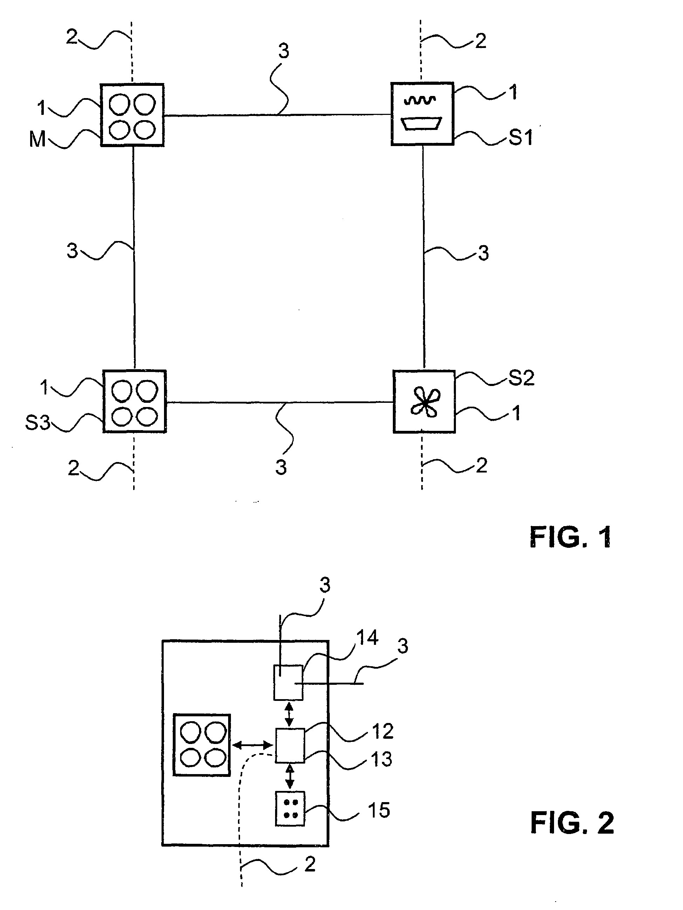

Die Figur 1 zeigt schematisch eine Mehrzahl von Heizeinrichtungen 1. Im vorliegenden Ausführungsbeispiel sind vier Heizeinrichtungen 1 angeordnet. Unter einer Heizeinrichtung 1 werden Geräte verstanden, welche typischerweise in einer Grossküche zum Einsatz kommen. Also beispielsweise ein Kochherd, ein Backofen, eine Friteuse, ein Steamer oder ein Mikrowellengerät etc.. In Grossküchen werden solche Heizeinrichtungen 1 typischerweise in einem Set, welches auch als Insel oder Kochinsel bezeichnet werden kann, von einigen Einheiten (beispielsweise vier bis sechs Einheiten) zusammengefasst. Eine Grossküche kann dabei mehrere Sets oder Kochinseln beinhalten, wobei diese Kochinseln voneinander unabhängig sind. Eine einzelne Kochinsel hat vorzugsweise zwischen drei bis zwölf einzeln schaltbare Heizeinrichtungen.

Figur 2 zeigt eine Heizeinrichtung 1 schematisch im Detail. Jede Heizeinrichtung 1 umfasst neben der eigentlichen Heizeinrichtung 10 (hier ein Kochherd), mit welcher die Speisen erhitzt werden, eine Apparatesteuerung 11. Dabei ist die Apparatesteuerung 11 in die Heizeinrichtung 1 integriert. Die Apparatesteuerung 11 jeder Heizeinrichtung 1 beinhaltet eine Steuereinrichtung 12, eine Speichereinrichtung 13, eine Kommunikationseinrichtung 14 und Eingabeelemente 15.

Die Steuereinrichtung 12 dient im wesentlichen der Steuerung bzw. Regelung der Heizeinrichtung 1. Insbesondere steuert die Steuereinrichtung 12 die Leistungszufuhr an die entsprechende Heizeinrichtung 1 aufgrund der Parameter, welche durch das erfindungsgemässe Verfahren definiert bzw. vorgegeben werden.

Die Speichereinrichtung 13 dient der Speicherung von Daten, insbesondere von einer Tabelle, welche über die Kommunikationseinrichtung 14 erhalten werden. Die Tabelle umfasst dabei Informationen bzw. Parameter, welche sich auf die Leistungszufuhr der einzelnen Heizeinrichtungen 1 richtet. Die Steuereinrichtung 12 kann diese Informationen aus der Speichereinrichtung 13 abfragen und so die Parameter für die Leistungszufuhr beziehen.

Wie erwähnt umfasst jede Heizeinrichtung 1 Eingabeelemente 15, wie Drehschalter, Tastaturblöcke etc., mit welchen der Benutzer die Heizeinrichtung 1 bedienen kann. Insbesondere kann der Benutzer dabei ein gewünschtes Leistungsniveau, sprich eine gewünschte Garstufe, vorgeben. Unter Leistungsniveaus wird eine bestimmte Leistungsaufnahme an Wirkleistung aus dem Anschluss des Stromnetzes verstanden.

Das Vorsehen einer Steuereinrichtung 12 und der Speichereinrichtung 13 für jede Heizeinrichtung 1 hat den Vorteil, dass keine separate, zentrale Steuereinheit oder Steuervorrichtung vorgesehen werden muss, welche die Gesamtleistungsaufnahme begrenzt. Dadurch können unter anderem die Kosten gesenkt werden. Ferner erlaubt dies ein flexibles Zusammenstellen von unterschiedlichen Heizeinrichtungen. Insbesondere beim Hinzufügen einer neuen Heizeinrichtung 1 in eine schon bestehende Kochinsel ist dies vorteilhaft, denn dadurch entfällt ein Anpassen einer zentralen Steuereinheit.

Wie in der Figur 1 gezeigt wird, werden die Heizeinrichtungen 1 über eine Anschlussleitung 2 mit elektrischer Energie versorgt. Dabei ist jede Heizeinrichtung 1 mit einer eigenen, separaten Anschlussleitung 2 an das elektrische Netz angeschlossen. Alternativ kann die Anschlussleitung 2 auch eine gemeinsame Anschlussleitung sein, wobei alle vier Heizeinrichtungen über dieselbe Anschlussleitung versorgt werden.

Die Kommunikationseinrichtungen 14 der einzelnen Heinzeinrichtungen 1 sind über ein Bussystem 3 miteinander verbunden. Dabei sind die Kommunikationseinrichtungen 14 derart ausgebildet, um mit dem Bussystem 3 bzw. über das Bussystem 3 mit Steuereinrichtungen von den anderen am Bussystem 3 angeschlossenen Heizeinrichtungen 1 zu kommunizieren. Das heisst, die Kommunikationseinrichtung 14 ist in der Lage, Daten zu senden, zu empfangen und anschliessend der Steuerungseinrichtung 12 zur Verfügung zu stellen.

Das Bussystem kann beispielsweise drahtgebunden sein, dabei sind alle Kommunikationseinrichtungen 14 miteinander verbunden, vorzugsweise seriell. Alternativ kann das Bussystem auch ein drahtloses Netzwerk sein, wie beispielsweise ein WLAN-Netzwerk, ein Bluetooth-Netzwerk, ein IR-Netzwerk etc.. Bei den beschriebenen Netzwerken bzw. Bussystemen können neue Heizeinrichtungen 1 besonders einfach in den Verbund von schon bestehenden Heizeinrichtungen 1 integriert werden. Besonders flexibel und einfach realisierbar sind dabei die drahtlosen Netzwerke. Alternativ kann auch ein drahtgebundenes LAN-Netzwerk eingesetzt werden.

Die Daten richten sich insbesondere auf die Leistungsaufnahme der einzelnen Heizeinrichtungen 1 und die Gesamtleistungsaufnahme, wie dies unten mit dem erfindungsgemässen Verfahren beschrieben wird, sowie auf die Anschlussleistung.

Zusammenfassend kann gesagt werden, dass die Apparatesteuerung 11 demnach nicht nur der Steuerung der Heizeinrichtung 10 dient, sondern auch der Steuerung der maximalen Gesamtleistungsaufnahme. Es handelt sich hier demnach um eine dezentrale Anordnung einer Vorrichtung zur Steuerung der maximalen Leistungsaufnahme.

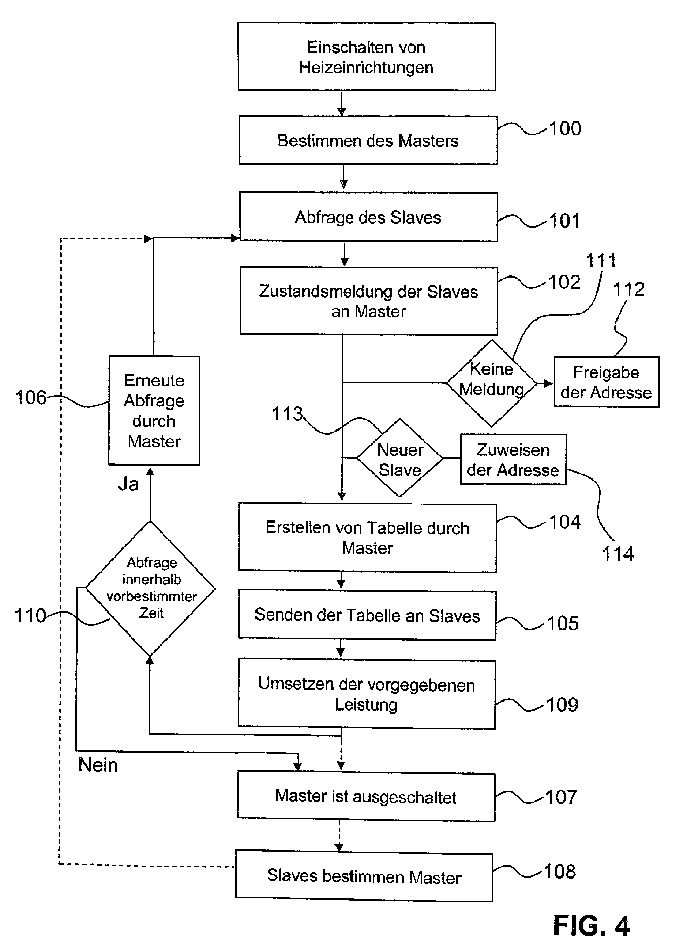

Das in Figur 4 dargestellte Flussdiagramm zeigt das erfindungsgemässe Verfahren zur Steuerung des Verbrauches von elektrischer Energie für eine Mehrzahl von elektrischen Heizeinrichtungen 1. Die Aufgabe der Steuerung ist dabei, den gesamten Leistungsverbrauch so zu limitieren, dass die Summe der Leistungsaufnahme aller einzelnen Heizeinrichtungen 1, also die Gesamtleistungsaufnahme, nicht grösser als die vorbestimmte maximale Leistungsaufnahme wird bzw. nicht grösser als der maximale Anschlusswert wird, vorteilhaft limitiert auf einen voreinstellbaren Schwellwert, beispielsweise als Prozentsatz des maximalen Anschlusswertes.

In einem ersten Schritt 100 schaltet der Benutzer eine oder mehrere Heizeinrichtungen 1 ein. Der Benutzer wählt dabei beispielsweise eine Temperatur oder eine bestimmte Garstufe, mit welcher er die entsprechende Heizeinrichtung 1 betreiben möchte. Aus dieser Eingabe ergibt sich die durch jede Heizeinrichtung 1 aufzunehmende Leistung. Die Gesamtleistungsaufnahme ergibt sich aus der Summe der Leistungsaufnahme jeder einzelner Heizeinrichtungen. Die Gesamtleistungsaufnahme soll dabei eine vorgegebene maximale Leistung nicht überschreiten. Mit dem erfindungsgemässen Verfahren kann nun die Leistungsaufnahme der einzelnen Heizeinrichtung im Hinblick auf die Gesamtleistungsaufnahme derart beschränkt werden, dass die maximale Leistung nicht überschritten wird.

Nach dem Einschalten der einzelnen Heizeinrichtungen 1, wird nun in Schritt 101 ein Master M bestimmt. Dabei ist vorteilhafterweise jede Apparatesteuerung 11 so ausgerüstet, dass diese die Funktion des Masters M übernehmen kann. Es ist auch möglich, dass einzelne Heizeinrichtungen 1 oder Stationen nur Slaves sein können. Im vorliegenden Ausführungsbeispiel nach Figur 1 ist diejenige Heizeinrichtung 1 mit dem Master-Zustand mit dem Bezugszeichen M versehen. Alle anderen Heizeinrichtungen 1 haben einen Slave-Zustand S1, S2, S3. Diejenige Heizeinrichtung 1 mit dem Master-Zustand kann dabei Befehle bezüglich der Leistungsaufnahme zu denjenigen Heizeinrichtungen 1 mit dem Slave-Zustand S senden.

Das Bussystem 3 ist derart ausgebildet, dass Buskollisionen erkannt werden, wobei im Falle einer Buskollision der Master M üblicherweise neu definiert wird.

Bezüglich der Bestimmung des Masters sind viele Steuerregime denkbar. Beispielsweise ist es denkbar, dass nach dem Einschalten die eingeschaltete Heizeinrichtung 1, die anderen Heizeinrichtungen 1 nach ihrem Zustand abfragt. Sofern die anderen Heizeinrichtungen 1 später als die besagte eingeschaltete Heizeinrichtung 1 eingeschaltet worden sind, haben diese noch keinen definierten Zustand. Die zuerst eingeschaltete Heizeinrichtung 1 wird sich nun als Master M definieren. Sofern die anderen Heizeinrichtungen 1 vor der eingeschalteten Heizeinrichtung 1 eingeschaltet worden sind, ist schon eine Heizeinrichtung 1 als Master M definiert. Dann wird die eingeschaltete Heizeinrichtung den Zustand Slave S einnehmen. Es kann pro Kochinsel nur eine Heizeinrichtung den Zustand des Masters M haben.

Nach der Zuweisung der Zustände (Master/Slave) an die Steuereinrichtung 12 der entsprechenden Heizeinrichtung 1 folgt der Schritt der Abfrage 102 der Slaves S. Der Master M fragt alle Slaves S nach der angeforderten Leistung ab. Die vom Benutzer als erforderlich angesehene Leistung ergibt sich aus den Einstellungen des Benutzers, welche er wie oben schon erwähnt über die Eingabeelemente 15 eingibt bzw. einstellt.

Im Gegensatz zu Vorrichtung und Verfahren aus dem Stand der Technik entfällt hier eine Leistungsmessung für jede einzelne Heizeinrichtung 1, da die Feststellung der gewünschten Leistungsaufnahme über die Einstellungen des Benutzers der Eingabeelemente 15 erfolgt.

Nach dem Schritt der Abfrage 102, führen alles Slaves S den Schritt 103 "Zustandsmeldung der Slaves S an Master M" aus. Dabei werden die gewünschten Daten bezüglich der Leistungsaufnahme an den Master M übermittelt.

Sobald die Daten aller Slaves S beim Master M vorliegen, erstellt dieser im Schritt 104 eine Tabelle mit den gewünschten Leistungsaufnahmen der Heizeinrichtungen mit dem Slave-Zustand S und derjenigen mit dem Master-Zustand M. Die Tabelle umfasst mindestens drei Datenbereiche. In einem ersten Datenbereich werden Daten abgespeichert, mit welchen die entsprechende Heizeinrichtung zweifelsfrei identifiziert werden kann. In einem zweiten Datenbereich wird die gewünschte, also die vom Benutzer eingestellte, Leistung abgespeichert. In einem dritten Datenbereich wird die zugewiesene Leistung der einzelnen Heizeinrichtung abgespeichert. Die zugewiesene Leistung wird von der Steuereinrichtung 12 des Masters M berechnet.

Wie oben schon erwähnt soll die Gesamtleistungsaufnahme einen Schwellwert, beispielsweise in Prozent des maximalen Anschlusswertes nicht überschreiten. Falls nun die Gesamtleistungsaufnahme (i.e. Summe aller gewünschter Leistungen) grösser als der Schwellwert ist, bestimmt der Master das Leistungsniveau für jede Heizeinrichtung. Dabei berechnet der Master beispielsweise, um wie viel Prozent jede Heizeinrichtung die gewünschte Leistung senken muss, so dass der maximale Anschlusswert nicht mehr überschritten wird. Dieser Wert wird in der Spalte zugewiesene Leistung in % der gewünschten Leistung abgespeichert.

Folgende Tabelle ist ein Beispiel einer solchen Tabelle, wie sie vom Master M erstellt wird. Die maximale Anschlussleistung liegt typischerweise zwischen 8 kW und 45 kW, im vorliegenden Beispiel bei 10 kW, wobei die gewünschte Gesamtleistungsaufnahme bei 14 kW liegt. Das heisst, dass die Leistung um 4 kW bzw. rund 31 % gesenkt werden muss. Dieser Wert wird in der Spalte "zugewiesene Leistung in % der gewünschten Leistung" abgelegt.

| Nr: | Heizeinrichtung: | Gewünschte Leistung: | Zugewiesene Leistung in % der gewünschten Leistung: |
|---|---|---|---|
| 1 | Master M | 3.5 kW | 69 % |
| 2 | Slave S 1 | 3.5 kW | 69 % |
| 3 | Slave S 2 | 2.5 kW | 69 % |
| 4 | Slave S 3 | 5.0 kW | 69 % |

In der obigen Tabelle ist die zugewiesene Leistung bei allen vier Heizeinrichtungen proportional. Es ist aber auch denkbar, dass eine bestimmte Heizeinrichtung, beispielsweise ein Backofen, immer einen höheren Wert zugewiesen bekommt. Auch kann es sein, dass Heizeinrichtungen bzw. Geräte in der Aufwärmphase generell 100% der eingestellten Leistung erhalten, solange nicht andere Anschlusswerte von einer als Master M definierten Heizeinrichtung zugewiesen wird oder aber über eine definierte Zeitdauer. Dabei hat die Heizeinrichtung in der Aufwärmphase einen Prioritätszustand. Solche Prioritätsregime können zeitlich begrenzt sein und/oder alternativ mit dem beschriebenen Proportionalregime abwechseln.

Nach dem Erstellen der Tabelle wird diese im Schritt 105 an die einzelnen Slaves S verteilt und im Speicherelement 12 abgespeichert. Die Steuereinrichtung 12 der entsprechenden Heizeinrichtung 1 kann nun die Daten aus dem Speicherelement 12 auslesen und steuert die eigene Heizeinrichtung 1 nach Massgabe der zugewiesenen Leistung. Im Flussdiagramm wird dies mit dem Block 109 Umsetzen der vorgegeben Leistung dargestellt. Das heisst, dass beispielsweise die Heizeinrichtung 2, welcher den Zustand eines Slaves S1 zugewiesen worden ist, mit einer Leistung von 69 % der gewünschten Leistung betrieben wird.

Die Heizeinrichtungen 1 werden nun eine bestimmte Zeit mit den durch den Master festgelegten Bedingungen betrieben. Da der Benutzer während eines Kochvorganges die Leistungsaufüahme von einzelnen Heizeinrichtungen 1 verstellt, erfordert dies weitere Abfragen über die gesamte Einschaltzeit der Heizeinrichtungen 1. Nach einer gewissen Totzeit beispielsweise nach 20 oder 30 Sekunden, erfolgt im Schritt 106 eine erneute Abfrage der Slaves S durch den Master M. Die Zeit zwischen den einzelnen Abfrageintervallen wird als Totzeit verstanden. Dabei wird wiederum die gewünschte Leistung jedes Slaves S und des Masters M abgefragt und durch den Master M in die Tabelle gespeichert. Ferner wird wiederum die zugewiesene Leistung berechnet. Mit anderen Worten heisst dies, dass die Schritte 102 bis 105 wiederholt werden.

In anderen Ausführungsformen kann die Totzeit auch kürzer oder länger sein. Beispielsweise ist es denkbar, dass die Totzeit zwischen 1 und 60 Sekunden, insbesondere zwischen 10 und 30 Sekunden ist.

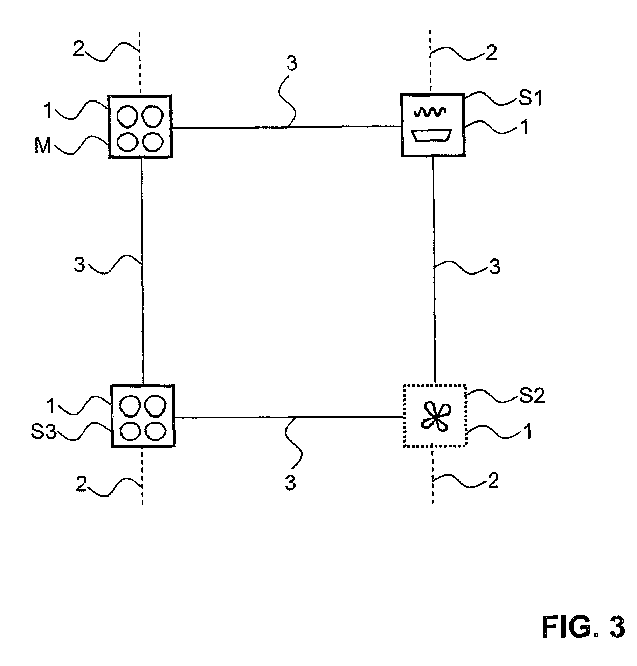

Die Figur 3 zeigt die Anordnung der vier Heizeinrichtungen 1, wobei der Slave S2 in diesem Falle ausgeschaltet ist. Das Ausschalten eines Slaves S wird in der Tabelle dadurch vermerkt, dass die Tabelle entweder nur noch drei anstelle der vier Zeilen oder eine Leerzeile aufweist. Zudem wird den Slaves gegebenenfalls eine neue Identifikationsnummer zugewiesen. Durch das Ausschalten des Slaves S2 wird das Bussystem 3 nicht unterbrochen. Sobald eine ausgeschaltete Heizeinrichtung wieder eingeschaltet wird, so wird diese wiederum durch den Master M abgefragt.

Beim Ausschalten des Masters M werden Slaves S nicht mehr abgefragt bzw. erhalten keine Tabelle mehr. Im Entscheidungsblock 110 wird festgestellt, ob die Abfrage innerhalb einer vorbestimmten Zeit erfolgt. Die Abfrage bzw. das Erhalten der Tabelle innerhalb einer vorgegebenen Zeit kann beispielsweise von jedem der Slaves S überwacht werden. Sobald dieser Vorgang nach der entsprechenden Zeit nicht eingetreten ist, bestimmen die Slaves S mit dem Schritt 108 einen neuen Master M. Da die Tabelle mit den Leistungsdaten durch jeden Slave S in dem entsprechenden Speicherelement abgespeichert worden ist, wird verhindert, dass die Slaves S die Daten bezüglich der Leistungsbeschränkung verlieren. Zudem kann der neue Master M die vom vorhergehenden Master schon erstellte Tabelle verwenden. Die Tabelle könnte dann wie folgt aussehen:

| Nr: | Heizeinrichtung: | Gewünschte Leistung: | Zugewiesene Leistung in % der gewünschten Leistung: |
|---|---|---|---|
| 1 | Ausgeschaltet | 0 kW | |
| 2 | Master M (war Slave S 1) | 3.5 kW | 91 % |
| 3 | Slave S1 (war Slave S 2) | 2.5 kW | 91% |
| 4 | Slave S2 (war Slave S 3) | 5.0kW | 91% |

Auch in diesem Fall fragt der neue Master M die Slaves S nach den Schritten 102 bis 105 periodisch ab. Vorteilhafterweise wird die vorgegebene Zeit unter Berücksichtigung möglicher Busskollisionen ebenfalls in der Speichereinrichtung 13 gespeichert.

Vor dem Erstellen der Tabelle durch den Master M, stellt dieser fest, ob sich ein Slave, welcher noch in der zeitlich vorhergehenden Tabelle aufgeführt ist, keine Zustandsmeldung abgegeben hat. Siehe in Figur 4 Schritt 111 Keine Meldung Slave. Anschliessend wird die Adresse des Slaves im Block 112 Freigabe der Adresse freigegeben und kann einem anderen Slave zugewiesen werden.

Ebenfalls vor dem Erstellen der Tabelle durch den Master M, stellt dieser fest, ob sich ein Slave gemeldet hat, welcher in der zeitlich vorhergehenden Tabelle noch nicht aufgeführt ist. Siehe Schritt 113 neuer Slave. Falls ein neuer Slave vorhanden ist, wird diesem bei Schritt 114 eine neue Adresse zugewiesen.

Bei einer Umstellung der gewünschten Leistung einer Heizeinrichtung durch die Eingabeelemente 15 zwischen dem Senden einer ersten Tabelle und dem Senden einer nachfolgenden Tabelle, wird die Leistungsaufnahme der entsprechenden Heizeinrichtung angepasst. Es wird nun auf den Slave S 1 der erstgenannten Tabelle Bezug genommen. Die vom Benutzer gewünschte Leistung ist dabei 3.5 kW und die zugewiesene Leistung ist 69% von der gewünschten Leistung. Falls der Benutzer die gewünschte Leistung nun senkt (z.B. von 3.5 kW auf 2.5kW), so wird die Heizeinrichtung weiterhin 69% der neuen gewünschten Leistung beziehen (also 69% der 2.5 kW). Dies wirkt sich nicht negativ auf die gesamte Leistungsaufnahme auf, denn der vorbestimmte Schwellwert kann nicht überschritten werden.

Im Falle der Erhöhnung der gewünschten Leistung ist das Regime ähnlich. Falls der Benutzer die gewünschte Leistung nun erhöht (z.B. von 3.5 kW auf 4.5kW), so wird die Heizeinrichtung weiterhin 69% der neuen gewünschten Leistung beziehen (also 69% der 4,5 kW). Dadurch kann die Gesamtleistungsaufiiahme grösser werden als der vorbestimmte Schwellwert. Dies wird dann aber bei einer erneuten Abfrage wieder korrigiert. Das heisst, dass ein Übersteigen des Schwellwertes für die Zeit zwischen den einzelnen Abfragen toleriert wird.

### Bezugszeichenliste

- 1: Heizeinrichtung
- 2: Anschlussleitung
- 3: Bussystem

- 10: Heizeinrichtung
- 11: Apparatesteuerung
- 12: Steuerungseinrichtung
- 13: Speichereinrichtung
- 14: Kommunikationseinrichtung
- 15: Eingabeelemente

- 100: Einschalten von Heizeinrichtungen
- 101: Bestimmen des Masters
- 102: Abfrage der Slaves
- 103: Zustandsmeldung der Slaves an Master
- 104: Erstellen von Tabelle durch Master
- 105: Senden der Tabelle an Slaves
- 106: Erneute Abfrage durch Master
- 107: Master wird ausgeschaltet
- 108: Slaves bestimmen Master
- 109: Umsetzen der vorgegeben Leistung
- 110: Abfrage innerhalb vorbestimmter Zeit
- 111: Keine Meldung von Slave
- 112: Freigabe von Adresse
- 113: Neuer Slave
- 114: Zuweisen neuer Adresse

## Patentansprüche

1. Verfahren zur Steuerung des Verbrauches von elektrischer Energie für eine Mehrzahl von elektrischen Heizeinrichtungen (1) einer Küche mit jeweils einer Apparatesteuerung (11) wobei die Apparatesteuerung (11) eine Steuerungseinrichtung (12), eine Speichereinrichtung (13), eine Kommunikationseinrichtung (14) und Eingabeelemente (15) zur Vorgabe des gewünschten Leistungsniveaus umfasst, wobei die Kommunikationseinrichtungen (14) der Heizeinrichtungen (1) miteinander kommunizieren können, wobei eine der eingeschalteten Heizeinrichtungen (1) mit der entsprechenden Apparatesteuerung (11) als Master (M) bestimmt wird, und dass die anderen eingeschalteten Heizeinrichtungen (1) mit den entsprechenden Apparatesteuerungen (11) als Slaves (S) definiert werden, wobei dem Master (M) die gewünschten oder möglichen Leistungsniveaus aller angeschalteten Heizeinrichtungen (1) über die Kommunikationseinrichtungen (14) mitgeteilt werden, wobei der Master (M) die Leistungsaufnahme aller angeschalteten Heizeinrichtungen (1) bestimmt, so dass ein vorbestimmter Schwellwert nicht überschritten wird, **dadurch gekennzeichnet, dass** die Slaves (S) in periodischen Intervallen prüfen, ob sie vom Master (M) abgefragt werden, wobei bei einer fehlenden Abfrage eine des bisher Slave definierte Apparatesteuerung (11) als neuer Master (M) bestimmt wird.

2. Verfahren nach Anspruch 1, **dadurch gekennzeichnet, dass** die Kommunikationseinrichtungen (14) über ein Bussystem (3) oder ein Netzwerk, wie ein drahtgebundenes Netzwerk oder ein drahtloses Funknetzwerk, kommunizieren.

3. Verfahren nach Anspruch 1 oder 2, **dadurch gekennzeichnet, dass** der Master (M) eine Tabelle erstellt, wobei die Tabelle mindestens die Identifikation des Slaves (S) und des Masters (M), die von der Heizeinrichtung (1) des entsprechenden Slaves (S) gewünschte Leistungsaufnahme und die vom Master (M) bestimmte Leistungsaufnahme für jede Heizeinrichtung (1) beinhaltet.

4. Verfahren nach einem der vorhergehenden Ansprüche, **dadurch gekennzeichnet, dass** die maximal zur Verfügung stehende Leistung prozentual nach der gewünschten Leistungsaufnahme der einzelnen Heizeinrichtungen (1) auf die entsprechenden Heizeinrichtungen (1) verteilt wird.

5. Verfahren nach einem der vorhergehenden Ansprüche, **dadurch gekennzeichnet, dass** der Master (M) die Tabelle allen Slaves (S) übermittelt, wobei die Tabelle durch die entsprechende Speichereinrichtung (13) bei jeder Heizeinrichtung (1) gespeichert wird.

6. Verfahren nach einem der vorhergehenden Ansprüche, **dadurch gekennzeichnet, dass** der Master (M) die Slaves (S) in periodischen Intervallen nach der gewünschten Leistungsaufnahme abfragt.

7. Vorrichtung zur Steuerung des Verbrauches von elektrischer Energie für eine Mehrzahl von elektrischen Heizeinrichtungen (1) einer Küche, wobei jede Heizeinrichtung (1) eine Apparatesteuerung (11) umfasst, wobei die Apparatesteuerung (11) mindestens eine Steuereinrichtung (12), Eingabeelemente (13) zur Vorgabe eines gewünschten Heizzustandes, eine Speichereinrichtung (1) zur Speicherung von Daten und eine Kommunikationseinrichtung (14) umfasst, wobei jeder Apparatesteuerung (11) wahlweise einen Zustand als Master (M) oder als Slave (S) zuweisbar ist, wobei durch den Master (M) die Leistungsaufnahme aller Heizeinrichtungen (1) bestimmbar sind, **dadurch gekennzeichnet, dass** die Vorrichtungen mit dem Zustand als Slave (S) in periodischen Intervallen prüfen, ob sie von der Vorrichtung mit dem Zustand als Master (M) abgefragt werden, wobei bei einer fehlenden Abfrage einer anderen Vorrichtung der Zustand als Master (M) zuweisbar ist.

8. Vorrichtung nach Anspruch 7, **dadurch gekennzeichnet, dass** die Kommunikationseinrichtungen (14) jeder Heizeinrichtung (1) miteinander über ein drahtgebundenes Netzwerk, insbesondere ein Bussystem, oder drahtloses Netzwerk kommunizieren.

9. Vorrichtung Anspruch 7 oder 8, **dadurch gekennzeichnet, dass** die Apparatesteuerungen (11) mit dem Zustand des Slaves (S) in periodischen Intervallen durch die Apparatesteuerung mit dem Zustand des Masters (M) nach der gewünschten Leistungsaufnahme abfragbar sind.

## Claims

1. Method for controlling the consumption of electrical power for a plurality of electrical heating devices (1) in a kitchen, each having an apparatus controller (11), wherein the apparatus controller (11) comprises a control device (12), a memory device (13), a communication device (14) and input elements (15) for presetting the desired power level, wherein the communication devices (14) of the heating devices (1) can communicate with one another, wherein one of the switched-on heating devices (1) is defined by the appropriate apparatus controller (11) to be the master (M), and wherein the other switched-on heating devices (1) are defined by the appropriate apparatus controllers (11) as slaves (S), wherein the desired or possible power levels of all the connected heating devices (1) are signalled to the master (M) via the communication devices (14), wherein the master (M) determines the power consumption of all the connected heating devices (1) such that a predetermined threshold value is not exceeded, **characterized in that** the slaves (S) check at periodic intervals whether they are being checked by the master (M), wherein, if there is no check, one of the apparatus controllers (11) which was previously defined as a slave is defined as the new master (M).

2. Method according to Claim 1, **characterized in that** the communication devices (14) communicate via a bus system (3) or a network, such as a cable-based network or a wirefree radio network.

3. Method according to Claim 1 or 2, **characterized in that** the master (M) creates a table, wherein the table contains at least the identification of the slave (S) and of the master (M), the power consumption desired by the heating device (1) of the corresponding slave (S), and the power consumption, as defined by the master (M), for each heating device (1).

4. Method according to one of the preceding claims, **characterized in that** the maximum available power is distributed on a percentage basis between the corresponding heating devices (1) on the basis of the desired power consumption of the individual heating devices (1).

5. Method according to one of the preceding claims, **characterized in that** the master (M) transmits the table to all the slaves (S), wherein the table is stored by the corresponding memory device (13) for each heating device (1).

6. Method according to one of the preceding claims, **characterized in that** the master (M) checks the desired power consumption of the slaves (S) at periodic intervals.

7. Apparatus for controlling the consumption of electrical power for a plurality of electrical heating devices (1) in a kitchen, wherein each heating device (1) has an apparatus controller (11), wherein the apparatus controller (11) comprises at least one control device (12), input elements (13) for presetting a desired heating state, a memory device (1) for storage of data, and a communication device (14), wherein each apparatus controller (11) can selectively be assigned a state as the master (M) or as a slave (S), wherein the master (M) can decide the power consumption of all the heating devices (1), **characterized in that** the apparatuses with the slave (S) state check at periodic intervals whether they are being checked by the apparatus having the master (M) state, wherein, if there is no check, the state as the master (M) is assigned to another apparatus.

8. Apparatus according to Claim 7, **characterized in that** the communication devices (14) of each heating device (1) communicate with one another via a cable-based network, in particular a bus system, or a wirefree network.

9. Apparatus according to Claim 7 or 8, **characterized in that** the desired power consumption of the apparatus controllers (11) with the slave (S) state can be checked at periodic intervals by the apparatus controller having the master (M) state.

## Revendications

1. Procédé de commande de la consommation d'énergie électrique pour une pluralité de dispositifs de chauffage (1) électriques d'une cuisine comprenant à chaque fois une commande d'appareil (11), la commande d'appareil (11) incluant un dispositif de commande (12), un dispositif de mémorisation (13), un dispositif de communication (14) et des éléments de saisie (15) pour prédéfinir le niveau de puissance souhaité, les dispositifs de communication (14) des dispositifs de chauffage (1) pouvant communiquer entre eux, l'un des dispositifs de chauffage (1) allumés avec la commande d'appareil (11) correspondante étant défini comme Maître (M), et les autres dispositifs de chauffage (1) allumés avec les commandes d'appareil (11) correspondantes étant définis comme Esclaves (S), le niveau de puissance souhaité ou possible de tous les dispositifs de chauffage (1) connectés étant communiqué au Maître (M) par le biais des dispositifs de communication (14), le Maître (M) déterminant la puissance consommée par tous les dispositifs de chauffage (1) connectés de manière à ce qu'une valeur de seuil prédéfinie ne soit pas dépassée, **caractérisé en ce que** les Esclaves (S) vérifient à intervalles périodiques s'ils sont interrogés par le Maître (M), une des commandes d'appareil (11) définies jusqu'à présent comme Esclaves devenant le nouveau Maître (M) en l'absence d'interrogation.

2. Procédé selon la revendication 1, **caractérisé en ce que** les dispositifs de communication (14) communiquent par le biais d'un système de bus (3) ou d'un réseau tel qu'un réseau filaire ou un réseau radioélectrique sans fil.

3. Procédé selon la revendication 1 ou 2, **caractérisé en ce que** le Maître (M) crée un tableau, le tableau contenant au moins l'identification de l'Esclave (S) et du Maître (M), la puissance consommée souhaitée par le dispositif de chauffage (1) de l'Esclave (S) correspondant et la puissance consommée déterminée par le Maître (M) pour chaque dispositif de chauffage (1) .

4. Procédé selon l'une des revendications précédentes, **caractérisé en ce que** la puissance maximale disponible est distribuée proportionnellement aux dispositifs de chauffage (1) correspondants en fonction de la puissance consommée souhaitée des dispositifs de chauffage (1) individuels.

5. Procédé selon l'une des revendications précédentes, **caractérisé en ce que** le Maître (M) communique le tableau à tous les Esclaves (S), le tableau étant mémorisé pour chaque dispositif de chauffage (1) par le dispositif de mémorisation (13) correspondant.

6. Procédé selon l'une des revendications précédentes, **caractérisé en ce que** le Maître (M) interroge les Esclaves (S) à intervalles périodiques pour connaître la puissance consommée souhaitée.

7. Dispositif de commande de la consommation d'énergie électrique pour une pluralité de dispositifs de chauffage (1) électriques d'une cuisine, chaque dispositif de chauffage (1) comprenant une commande d'appareil (11), la commande d'appareil (11) incluant au moins un dispositif de commande (12), des éléments de saisie (13) pour prédéfinir un niveau de chauffage souhaité, un dispositif de mémorisation (1) pour mémoriser des données et un dispositif de communication (14), chaque commande d'appareil (11) pouvant prendre, au choix, un statut de Maître (M) ou d'Esclave (S), la puissance consommée par tous les dispositifs de chauffage (1) pouvant être déterminée par le Maître (M), **caractérisé en ce que** les dispositifs ayant le statut d'Esclave (S) vérifient à intervalles périodiques s'ils sont interrogés par le dispositif ayant le statut de Maître (M), le statut de Maître (M) pouvant être attribué à un autre dispositif en l'absence d'interrogation.

8. Dispositif selon la revendication 7, **caractérisé en ce que** les dispositifs de communication (14) de chaque dispositif de chauffage (1) communiquent entre eux par le biais d'un réseau filaire, notamment un système de bus, ou d'un réseau sans fil.

9. Dispositif selon la revendication 7 ou 8, **caractérisé en ce que** les commandes d'appareil (11) ayant le statut d'Esclave (S) peuvent être interrogées à intervalles périodiques par la commande d'appareil ayant le statut de Maître (M) pour connaître la puissance consommée souhaitée.
